# EUROPÄISCHE PATENTSCHRIFT

(11) **EP 0 544 851 B1**
(45) Veröffentlichungstag und Bekanntmachung des Hinweises auf die Patenterteilung: **24.09.1997**
(21) Anmeldenummer: 92910264.8
(22) Anmeldetag: 15.05.1992
(51) Int. Cl.: F16D 65/56

(54) **DRUCKGESTEUERTE NACHSTELLVORRICHTUNG FÜR EINE FAHRZEUGBREMSE**
PRESSURE-CONTROLLED ADJUSTING DEVICE FOR A VEHICLE BRAKE
DISPOSITIF DE RATTRAPAGE DE JEU COMMANDE PAR PRESSION POUR UN FREIN DE VEHICULE

(30) Priorität: 26.06.1991 DE 4121054
(43) Veröffentlichungstag der Anmeldung: 09.06.1993
(73) Patentinhaber: ITT Automotive Europe GmbH, 60488 Frankfurt (DE)
(72) Erfinder: THIEL, Rudolf, D-6000 Frankfurt am Main 90 (DE); DÖLL, Andreas, D-6000 Frankfurt am Main 1 (DE); HALASY-WIMMER, Georg, D-6236 Eschborn (DE)
(86) Internationale Anmeldenummer: EP9201075
(87) Internationale Veröffentlichungsnummer: WO9300527

(56) Entgegenhaltungen:
- EP-A- 0 154 398
- DE-A- 3 802 014
- DE-A- 3 943 106
- DE-C- 2 636 445
- DE-U- 8 811 920
- US-A- 3 920 103

## Beschreibung

Die vorliegende Erfindung betrifft eine Bremsbetätigungseinrichtung mit einer druckgesteuerten Nachstellvorrichtung für eine Fahrzeugbremse insbesondere Scheibenbremse. Derartige Nachstellvorrichtungen sind notwendig bei Bremssätteln, die neben der hydraulischen Funktion der Betriebsbremse auch die Funktion einer mechanischen Feststellbremse erfüllen sollen. Dabei muß der Belagverschleiß durch einen Nachstellmechanismus ausgeglichen werden, da sonst der Betätigungsweg der mechanischen Feststellbremse entsprechend dem Belagverschleiß sich vergrößert. Im Betrieb einer derartigen Nachstellvorrichtung ist sicherzustellen, daß die Bremse nicht selbsttätig zustellt, das heißt das Betriebslüftspiel zwischen Bremsbelag und Bremsscheibe nicht aufgebraucht wird. Die Belagkompression und die Sattelaufweitung bei höheren hydraulischen Drücken müßen ebenso kompensiert werden. Weiterhin muß die Nachstellvorrichtung unempfindlich gegen hohen hydraulischen Druck und Druckschwankungen, Temperatureinflüsse, Vibration sein sowie eine Betriebssicherheit über lange Zeit aufweisen.

Um nun zu verhindern, daß die Nachstellvorrichtung bei hohem Bremsdruck und damit bei einer elastischen Verformung des Sattels bzw. des Belages nachstellt, sind bereits Maßnahmen vorgeschlagen worden (siehe DE-OS 38 00 734 / DE-OS-38 00 735 und DE-OS 38 03 564), gemäß denen oberhalb eines bestimmten Bremsdruckes eine Nachstellung verhindert wird. Derartige Einrichtungen sind relativ kompliziert aufgebaut und bedürfen einer sehr sorgfältigen Einstellung der an diesem Abschaltvorgang der Nachstelleinrichtung beteiligten Bauelemente. Diese bekannten Nachstellvorrichtungen zeichnen sich insbesondere dadurch aus, daß ein aufgrund eines hohen Bremsdruckes sich ergebender Belagverschleiß bei dem jeweiligen Bremsvorgang nicht nachgestellt werden kann.

Aus der DE 38 02 014 A1 ist eine Nachstellvorrichtung bekannt, bei der zwar eine Drehbewegung der Nachstellmutter und damit Nachstellung bei hohem Bremsdruck verhindert wird, dieser Druck aber nicht gleichzeitig eine in Bremsbewegungsrichtung schiebende Bewegung auf die Nachstellmutter ausübt. Demgemäß hat die Erhöhung des Bremsdruckes keine direkte Wirkung auf die axiale Nachstellkraft der Nachstellmutter, die allein aus einer nachstellenden Feder resultiert. Eine solche Anordnung macht allerdings den Einsatz von zwei Dichtungen zwischen Nachstellmutter und Kolbeninnenfläche erforderlich, deren Zwischenraum über eine Verbindungsbohrung in der Bremskolbenwand mit atmosphärischem Druck beaufschlagt ist. Dadurch macht diese Nachstellvorrichtung einen erhöhten Dichtungs- und Teileaufwand unumgänglich. Ein weiterer Nachteil besteht da-rin, daß die Nachstellvorrichtung durch den Einsatz zweier Dichtungen, insbesondere im Montagefall bei Rückstellung des Bremskolbens, infolge höherer Reibung weniger leichtgängig ist.

Aus der DE-PS 26 15 404 ist es bekannt, bei relativ niedrigem Druck die Nachstellung abzuschalten und später bei abfallendem Druck den Weg nachzustellen, den der Kolben aufgrund des Belagverschleißes nicht mehr zurückgestellt hat. Nachteilig bei der bekannten Nachstellung ist es, daß sie einen recht aufwendigen Aufbau eines aus mehreren Einzelteilen bestehenden Zylinders benötigt. Dabei hinteschneidet der Reibkonus des sich drehenden Nachstellelementes einen Teil des Zylinders, so daß der Zylinder weitgehend demontiert werden muß um Einzelteile der Nachstellvorrichtung zu reparieren bzw. zu ersetzten. Das gilt insbesondere für den Austausch der zum Herbeiführen der Drucksteuerung notwendigen Dichtung.

Aus der US-PS 3 920 103 ist es bekannt, das drehbare Nachstellelement federbelastet innerhalb des Kolbens verschiebbar anzuordnen, wobei an dem drehbaren Element eine Dichtung angeordnet ist, die den belagseitigen Kolbenhohlraum gegenüber dem verbleibenden Raum des Bremszylinders abdichtet. Die dort beschriebene Nachstellung ist allerdings derart aufgebaut, daß die das drehende Nachstellglied belastende Feder ständig sucht, den Reibkonus außer Eingriff zu halten. Dabei ergeben sich für die Betätigung der Handbremse vergleichsweise große Nachstellwege. Die Erfindung geht daher aus von einer Nachstellvorrichtung der sich aus dem Oberbegriff des Anspruchs 1 ergebenden Gattung.

Aufgabe der Erfindung ist es, eine gattungsgemäße Bremsbetätigungseinrichtung mit Nachstellvorrichtung zu beschreiben, welche einfach und damit kostengünstig aufgebaut ist, mit einem vergleichsweise geringen Bauraum auskommt und besonders zuverlässig den vorgesehenen Wert für das Lüftspiel einstellt. Weiterhin soll insbesondere die Herstellung der einzelnen Bauteile der Nachstellvorrichtung, speziell der Nachstellmutter, vereinfacht werden.

Die Aufgabe wird durch die sich aus dem kennzeichnenden Teil ergebende Merkmalskombination gelöst.

Um sicherzustellen, daß beim Beginn des hydraulischen Bremsvorgangs der Reibkonus sicher geschlossen ist und auch die Nachstellung in Schließrichtung des Reibkonus bei Nachlassen des Bremsdruckes entgegen der vorliegenden mechanischen Reibung zuverlässig durchgeführt wird, wird das drehbare Nachstellelement in Richtung zum Reibkonus hin vorgespannt, wodurch etwaige Reibungsverluste überwunden werden können, die die Nachstellung nach dem Bremsvorgang behindern könnten. Die Federkraft wirkt in derselben Richtung wie die durch den Bremsdruck beaufschlagte Dichtung.

Die Möglichkeit einer preiswerten Herstellung des Innengewindes der Nachstellmutter wird realisiert, indem das durch Fließpressen vorgeformte Bauteil eine Durchgangsöffnung enthält, in die dann leicht ein Innengewinde zur Aufnahme der Spindel eingeformt werden kann.

Soweit der hinter der Dichtung im Innenraum des Kolbens liegende Bereich Umgebungsdruck aufweisen soll, empfiehlt es sich die Durchgangsöffnung in der Nachstellmutter durch eine eingepreßte Kugel oder ein zylindrisches Verschlußstück druckdicht zu verschließen, da hierdurch in einfacher Weise der Bremsdruck von dem druckfreien Raum im Kolben ferngehalten werden kann.

Eine besonders günstige Verstärkung der durch den Druck bedingten An/Abschaltwirkung der Nachstellung läßt sich durch die Verwendung der Merkmalskombination nach Anspruch 2 erreichen. Hierdurch wird der hinter der Dichtung liegende Kolbeninnenbereich auf den atmosphärischen Umgebungsdruck gebracht. Damit verstärkt sich die Wirkung des Bremsdrucks auf die Dichtung, wodurch der Reibkonus schon bei sehr geringen Bremsdrücken sicher geschlossen gehalten und somit eine Nachstellung während des Druckaufbaus bis zum endgültigen Druckabbau verhindert wird.

Um den druckfreien Innenraum des Kolbens gebenüber von außen kommendem Schmutz abzudichten und das Durchqanqsloch in möglichst großer Entfernung von der sich erhitzenden Bremsplatte zu halten, empfiehlt sich in Weiterbildung der Erfindung die Merkmalskombination nach Anspruch 3.

Eine besonders einfache Konstruktion ergibt sich durch die aus Anspruch 4 ersichtlichen Merkmale, da hier durch die zur Verfügung stehende Baulänge besonders gut ausgenutzt wird. Außerdem ist die Mutter aufgrund ihres größeren Durchmessers gegenüber der Spindel zur Aufnahme des Reibkonus besonders geeignet, da hier größere Durchmesser für den Konus und damit eine erhöhte Reibwirkung unschwer erreicht werden können.

Durch die Maßnahme nach Anspruch 5 läßt sich die Drehbeweglichkeit des drehenden Nachstellelements erheblich verbessern, wobei die möglichen Reibwerte weiter herabgesetzt und damit die Nachstellvorrichtung in der Genauigkeit ihres Nachstellverhaltens verbessert wird.

Insbesondere wenn das drehbare Nachstellelement aus einem weicheren für ein Fließpreßverfahren geeigneten Material hergestellt ist, empfiehlt sich in Weiterbildung der Erfindung die Anwendung der Merkmalskombination nach Anspruch 6. Damit das Wälzlager nicht auf dem Material der Dichtung läuft, wird die Einfügung einer Stützscheibe zwischen Lager und Dichtung vorgeschlagen.

Die Erfindung schafft insbesondere die Möglichkeit, von außen in den druckfreien Kolbeninnenraum zugreifen zu können, ohne daß Bremsflüssigkeit entweicht. Durch eine entsprechende Öffnung im Bremskolben kann somit auf das drehbare Nachstellelement zugegriffen werden, wodurch sich eine leichtere Rückstellung des nachgestellten Kolbens beim Auswechseln der Bremsbeläge erreichen läßt. Entsprechende Maßnahmen werden mit den Merkmalen nach Anspruch 7 vorgeschlagen. Dabei kann die Ausnehmung sowohl in das drehbare Nachstellelement eingeformt sein oder aber auch in ein Verschlußstück der Durchgangsöffnung eingebracht werden. Wichtig ist, daß die Stirnöffnung dabei gleichzeitig zum Belüften des druckfreien Kolbeninnenraumes dient, wodurch auf ein spezielles Durchgangsloch entsprechend Anspruch 2 verzichtet werden kann. Das Spiel zwischen Verschlußstück und Stirnöffnung verhindert gleichzeitig eine Reibung des drehenden Nachstellelements an der Kolbenfläche und ermöglicht gleichzeitig eine Führung für dieses Nachstellelement.

Eine Verbesserung der Auflagefläche des Kolbens auf der Trägerplatte des Bremsbelages läßt sich durch die Merkmale nach Anspruch 8 erreichen.

Es ist weiterhin hervorzuheben, daß für die Arbeitsweise der Nachstellvorrichtung die zweite Feder, die die Nachstellmutter gegenüber dem Bremskolben vorzuspannen sucht, nicht zwingend notwendig ist. Das gilt insbesondere für einen Aufbau der Erfindung gemäß Anspruch 2, da hier die Wirkung der Feder weitgehend durch die Wirkung des Bremsdrucks auf die Dichtung ersetzt werden kann. Es ist also nicht notwendig, daß das drehbare Nachstellelement durch die zweite Feder nachgestellt wird. Hierzu reicht schon der noch bestehende geringe Druck während des Abbaus des Bremsdruckes aus, bei dem sich die erste Feder entspannt und somit einen geringfügigen Spalt in dem Reibkonus schafft, der mit dem noch verbleibenden Bremsdruck nachqestellt wird.

Ein Ausführungsbeispiel der Erfindung wird nachfolgend mit mehreren Abänderungen anhand der Zeichnung beschrieben. Darin zeigt:
- Fig. 1: in geschnittener Darstellung eine vereinfachte Ausführungsform der erfindungsgemäßen Nachstellungsvorrichtung,
- Fig. 2: eine abgewandelte Dichtungseinheit der Nachstellvorrichtung nach Fig. 1,
- Fig. 3: eine gegenüber Fig. 2 abgewandelte Dichtungseinheit,

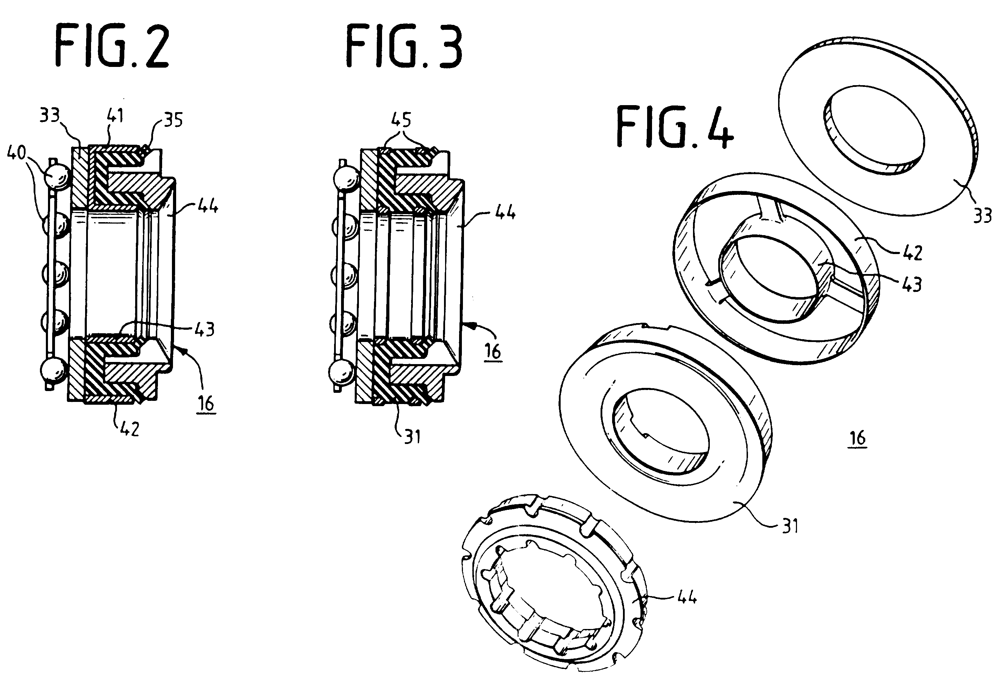

- Fig. 3: in auseinandergezogenen Darstellung einzelne Elemente der Dichtungseinheit nach Fig. 2,

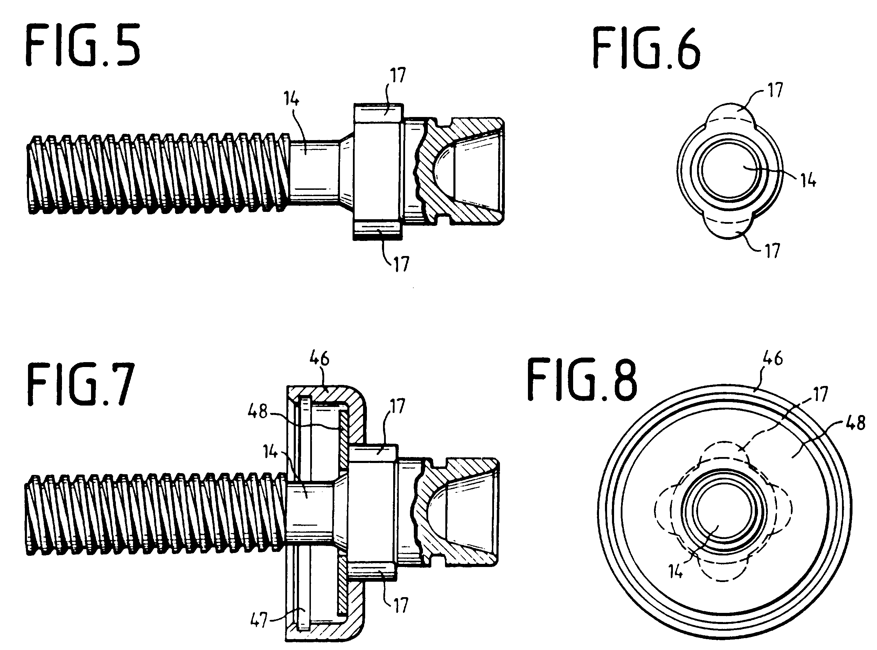

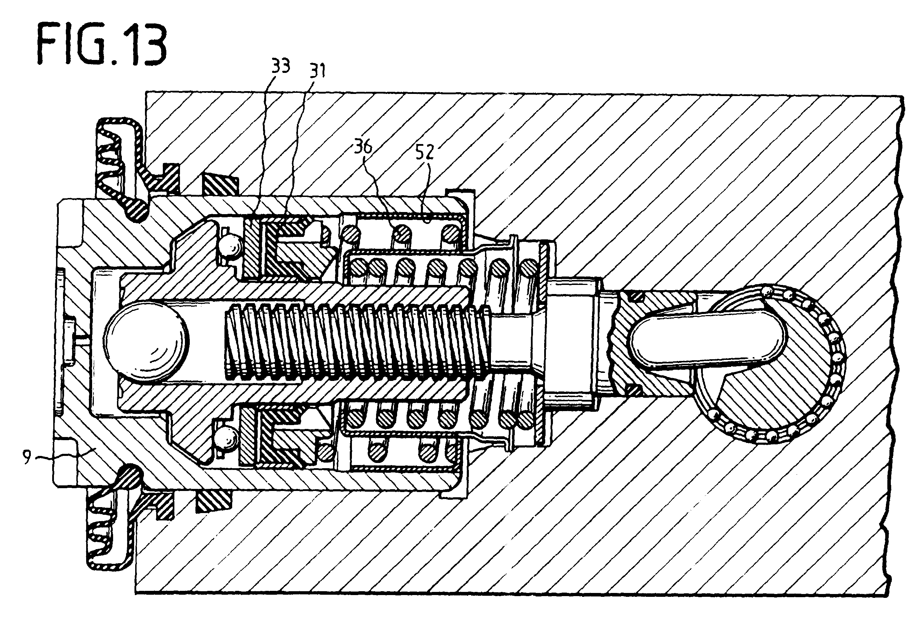

- Fig. 5 und 6: eine in der Darstellung nach Fig. 13 angewendete Nachstellspindel,
- Fig. 7 und 8: eine in einem Montagetopf angeordnete Nachstellspindel,

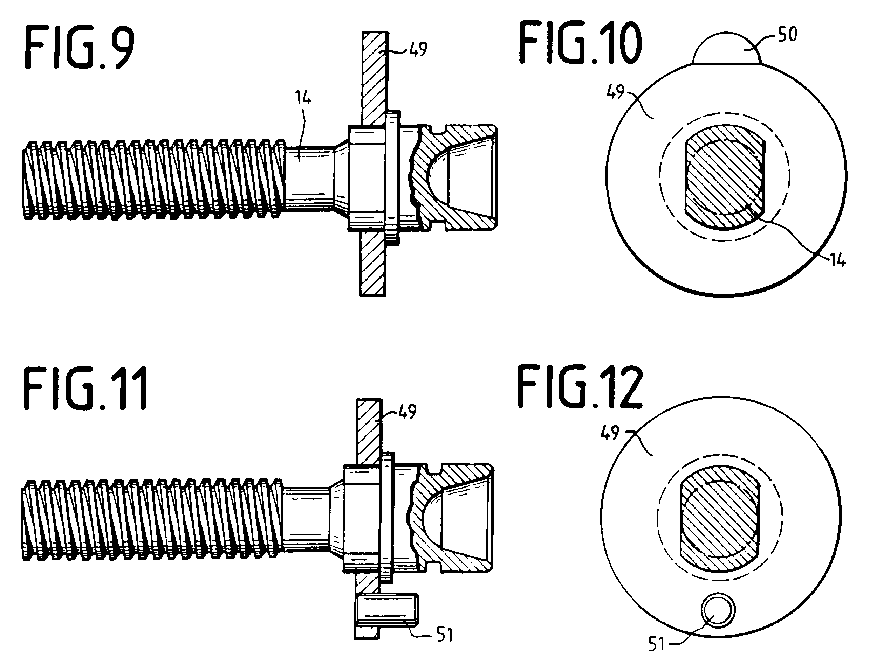

- Fig. 9 und 10: eine Nachstellspindel mit Sicherungsblech zur Verdrehsicherung,
- Fig. 11 und 12: eine Nachstellspindel mit Sicherungsblech und Sicherungsbolzen zur Verdrehsicherung,

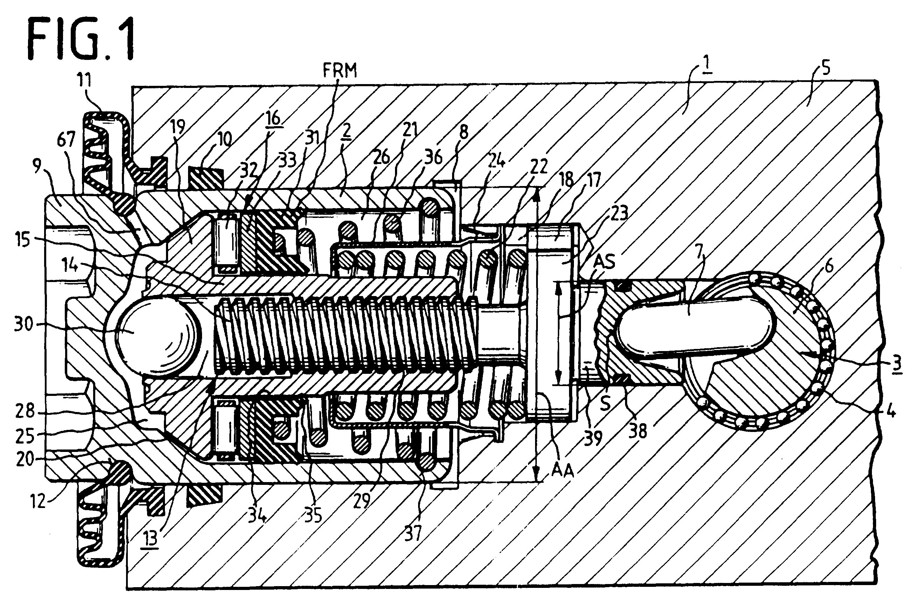

- Fig. 13: eine gegenüber Fig. 1 abgeänderte Ausführungsform einer Nachstellvorrichtung,

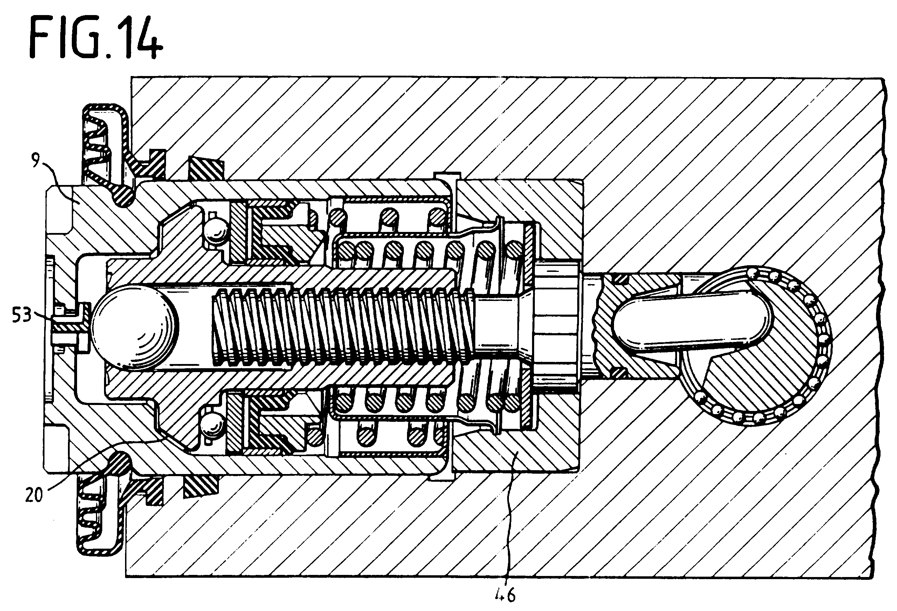

- Fig. 14: eine abgeänderte Ausführungsform einer Nachstellvorrichtung nach Fig. 13 bei der eine entsprechend Fig. 7 und 8 modifizierte Spindelhalterung eingesetzt wurde,

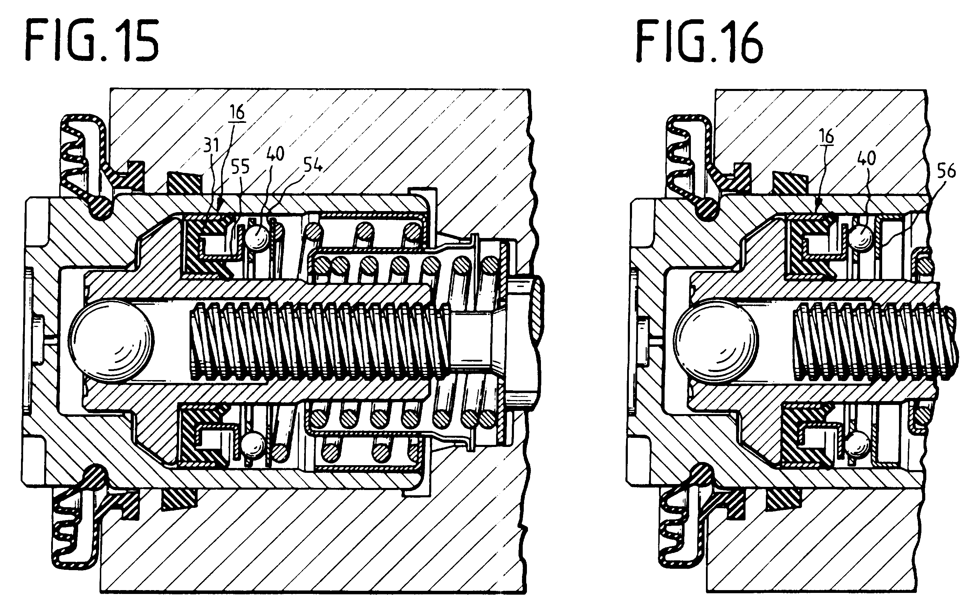

- Fig. 15: eine abgeänderte Nachstellvorrichtung gemäß Fig. 13 mit abgeänderter Dichtungseinheit,
- Fig. 16: eine Nachstellvorrichtung mit gegenüber Fig. 3 abgeänderter Dichtungseinheit,

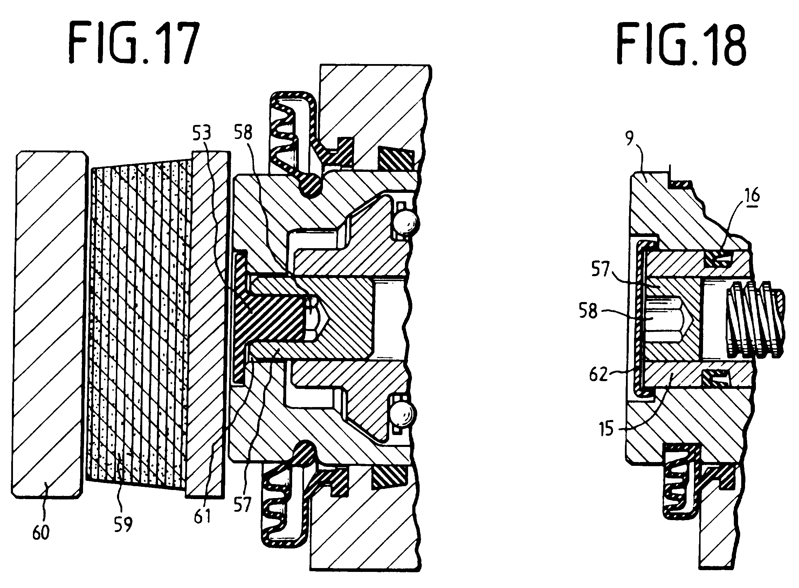

- Fig. 17: eine abgeänderte Dichtung für die Nachstellmutter und eine gegenüber Fig. 17 abgeänderte Nachstellmutter,

Fig. 1 zeigt eine Betätigungseinrichtung 1 für eine Scheibenbremse, die mit einer hydraulischen Betätigungsvorrichtung 2 und einer mechanischen Betätigungsvorrichtung 3 versehen ist. Die mechanische Betätigungsvorrichtung 3 besitzt eine mittels Wälzlagern 4 in einem Bremsengehäuse 5 drehbar gelagerte Betätigungswelle 6, durch deren Drehung ein Druckstück 7 im wesentlichen in axialer Richtung verschoben wird.

Zu der hydraulischen Betätigungsvorrichtung 2 gehört ein in das Bremsengehäuse 5 eingearbeiteter Stufenzylinder 8, in dem ein Kolben 9 aufgrund des ausgeübten Bremsdruckes axial verschiebbar ist. Der Kolben 9 ist gegenüber dem Zylinder 8 mittels einer Zylinderdichtung 10 abgedichtet, die gleichzeitig die bekannte Roll-back-Wirkung zum Rückholen des Kolbens 9 nach dem Bremsvorgang ausübt. Die Enden einer Schutzmanschette 11 sind in einer Ringnut 12 des Kolbens 9 sowie in einer entsprechenden Nut in dem Bremsgehäuse 5 gehalten.

Die Kraftübertragung zwischen der mechanischen Betätigungsvorrichtung 3 und dem Kolben 9 geschieht über eine Nachstellvorrichtung 13, die sich selbsttätig in ihrer Länge der aufgrund der Belagabnutzung sich ändernden Lage des Kolbens 9 im Zylinder 8 anpaßt und so den Weg für die mechanische Betätigungsvorrichtung 3 minimiert.

Die Nachstellvorrichtung 13 besteht im Kern aus einer Spindel 14 als undrehbarem Nachstellelement und einer Mutter 15 als drehbarem Nachstellelement.

Die Mutter ist über eine weiter unten näher beschriebene Dichtungseinheit 16 gegenüber der inneren Mantelfläche des hohlen Kolbens 9 gedichtet und drehbar gelagert. Die Spindel 14 ist mittels eines sich radial erstreckenden Ansatzes 17 der in eine Arretierungsnut 18 im Zylinder 5 eingreift oder mittels anderer weiter unten beschriebener Maßnahmen gegenüber dem Bremsengehäuse 5 drehgesichert aber axial verschiebbar. Ein Konusansatz 19 an der Mutter 15 besitzt eine Reibfläche, die zusammen mit einer entsprechenden Reibfläche am Boden des Kolbens 9 einen Reibkonus 20 bildet, durch welchen die Drehbewegung der Mutter 15 gegenüber dem Kolben druckgesteuert verriegelt und damit quasi abgeschaltet werden kann.

Mittels eines Federtopfes 21, der in eine entsprechende umlaufende Nut in den Zylinder 8 des Gehäuses 5 eingerastet ist, stützt das eine Ende einer ersten Feder 22 ab, die über einen Bund 23 der Spindel 14 diese gegen das Druckstück 7 zu pressen versucht. Der Federtopf 21 besitzt an seinem offenen Ende über den Umfang des Topfes verteilt Topfschlitze 24, die hierdurch gebildete Rastarme begrenzen, durch welche sich der Topf in eine entsprechende Nut im Gehäuse 5 einrasten läßt.

Für die Funktion der erfindungsgemäßen Nachstellvorrichtung sehr wichtig ist es, daß durch die Dichteinheit 16 der Innenraum des Kolbens 9 in zwei Teile unterteilt wird, wobei der in Fig. 1 linke Teil einen Umgebungsdruckraum 25 bildet, da dieser über ein Durchgangsloch 26 mit der Umgebung des Kolbens 9 verbunden ist. Auf diese Weise wird die zur Steuerung des Reibkonus und damit der Drehverriegelung der Mutter dienende Bremskraft im Bremsdruckraum 26 in ihrer Wirkung erhöht, da sie nicht mehr gegen den Restdruck im Raum 25 arbeitet sondern gegen den atmosphärischen Druck.

Um die Mutter 15 kostengünstiger fertigen zu können, ist diese vorzugsweise als Fließpreßteil ausgestaltet und mit einer Durchgangsöffnung 28 versehen, in die das Muttergewinde 29 eingearbeitet ist. Hierdurch ergibt sich eine recht preiswerte Fertigung für die Mutter 15. Für den Fall, daß das Durchgangsloch 26 vorgesehen ist, muß allerdings die Durchgangsöffnung 28 druckdicht verschlossen werden, um die Räume 25 und 26 druckmäßig voneinander zu trennen. Hierzu dient vorzugsweise eine Dichtkugel 30, die in die Durchgangsöffnung 28 eingepreßt ist.

Für die Wirkung der Dichtungseinheit 16 wird angestrebt, daß einerseits die Mutter 15 möglichst reibungsfrei gegenüber der Innenfläche des Kolbens drehen soll, andererseits schon bei sehr niedrigem Bremsdruck eine vollständige Dichtung des Raumes 25 gegenüber dem Raum 26 erreicht werden soll. Man muß somit auf eine geringe Reibung beim Drehen der Dichtungseinheit gegenüber der Mutter und ggf. der Kolbeninnenwand achten, während gleichzeitig dafür gesorgt werden muß, daß schon bei sehr geringem Bremsdruck die Dichtung anspricht und vollkommen abdichtet. Hierzu dient bei der Ausführung nach Fig. 1 eine Manschettendichtung 31 und ein als Nadellager ausgestaltetes Wälzlager 32, wobei zwischen die Manschettendichtung 31 und das Wälzlager 32 eine ringförmige Stützscheibe 33 eingefügt ist. Die Wahl eines Nadellagers 32 statt eines Kugellagers und die Stützscheibe vor der Dichtung und ggf. hinter dem Lager dienen dazu, den auf die Dichtung und die Mutter 19 durch den erheblichen Bremsdruck ausgeübte Belastung herabzusetzen, so daß die Leichtgängigkeit der Dichtungseinheit 16 gewährleistet bleibt.

Die Leichtgängigkeit der Manschettendichtung läßt sich noch erhöhen, indem man zumindest an der der Mutter 15 zugeordneten Dichtfläche einen Gleitring 34 einfügt oder den entsprechenden Raum durch eine Trennfuge ausgestaltet, so daß zur Mutter hin im wesentlichen nur die Dichtlippe 35 anliegt. Dementsprechend wird die Reibung erheblich vermindert, da die Mutter 15 sich im wesentlichen unter der Manschette 31 wegdreht und im wesentlichen keine Bewegung gegenüber der Kolbeninnenwand ausübt, daher die Reibungsverluste wegen des größeren Weges erheblich größer wären.

Die Dichtungseinheit 16 wird über eine zweite Feder 36 ausgehend von dem Kolben 9 gegenüber dem Konusansatz 19 leicht vorgespannt. Die Feder 36 fördert zwar die Arbeitsweise der erfindungsgemäßen Nachstellung, ist aber nicht unbedingt notwendig wie weiter unten noch erläutert wird. Das zur offenen Kolbenseite hin liegende Ende der zweiten Feder 36 ist in einer Haltenut 37 im Kolben 9 gesichert, wobei im Gefahrenfalle dieses Ende aus der Haltenut 37 ausrasten kann, wenn die auf die Feder wirkende zusammendrückende Kraft zu groß wird. Auf diese Weise ist sichergestellt, daß durch die Wirkung der Nachstellung niemals die Bewegung des Kolbens aufgrund des Bremsdruckes und damit der Bremsvorgang ernsthaft behindert werden kann.

Der Schaft 39 der Spindel 14 ist über eine Dichtung 38 abgedichtet, so daß durch den Bremsdruck eine Kraft auf die Querschnittsfläche AS des Schaftes 39 ausgeübt wird, der versucht die Spindel 14 zum Druckstück 7 hin zu verstellen.

Nachfolgend wird die Arbeitsweise der erfindungsgemäßen Nachstellung anhand von Fig. 1 erläutert.

Nach dem Einbau der Bremse herrscht folgende Ausgangssituation. Der Reibkonus 20 zwischen Mutter 15 und der Reibfläche des Kolbens 9 ist geschlossen. Der Schaft 39 der Spindel 14 liegt an dem Druckstück 7 an. Zwischen dem in Fig. 1 nicht dargestellten Belag vor dem Kolben 9 und der Bremsscheibe besteht ein Lüftspiel sowie ein Belageinstellmaß, welches notwendig ist um den für den Einbau der Bremse notwendigen Platz zu besitzen. Anschließend soll mit Hilfe einer einzigen Betätigung (one shot) oder sehr wenigen Betätigungen der Kolben nach dem Einbauvorgang der Bremse in seine Normallage gebracht werden. Dabei fährt durch hydraulischen Druckaufbau der Kolben einschließlich Belag an die nicht dargestellte Bremsscheibe. Hierdurch wird das Belageinstellmaß überwunden und der Differenzweg wird somit ggf. in einem einzigen Schritt nachgestellt.

Ausgehend von der oben beschriebenen Ruhelage spielen sich bei hydraulischer Betätigung ohne Belagverschleiß folgende Vorgänge ab. Der Reibkonus 20 ist entweder durch die Wirkung der zweiten Feder 36 geschlossen. Soweit die erfindungsgemäße Nachstellvorrichtung keine zweite Feder 22 besitzt, wird im Ruhezustand (zumindest nach vorheriger Bremsenbetätigung) der Reibkonus 20 ebenfalls geschlossen sein, da durch den Restdruck nach Beendigung des Bremsvorganges und durch die Rückstellwirkung der Zylinderdichtung 10 der Konusansatz 19 gegen die Reibfläche des Kolbens 9 gebracht wird. In dem Umgebungsdruckraum 25 befindet sich Umgebungsdruck (Differenzdruck-Prinzip). Der ansteigende hydraulische Bremsdruck lastet auf einer Differenzfläche A_{d}, die die Differenz zwischen der Kolbenfläche A_{A} und A_{S} ist.

Durch den wachsenden Bremsdruck wird der Reibkonus zusätzlich zur Kraft der Feder 36 angedrückt, somit ein Drehen der Mutter 15 und damit ein Nachstellen verhindert.

Sobald der Bremsdruck einen hinreichenden Wert erreicht hat, bewegt sich der Kolben einschließlich der gegen das Kolbeninnere gepreßten Mutter 15 in Fig. 1 nach links gegen den Belag und die Bremsscheibe. Da die Mutter 15 durch den Reibkonus 20 am Drehen gehindert ist, zieht sie über das Gewinde 29 nach Überwindung des Gewindespiels die verdrehgesicherte Spindel 14 mit nach links, wodurch die am Gehäuse 5 gehaltene erste Feder 22 zusammengepreßt wird. Der Schaft 39 der Spindel 14 hebt von der mechanischen Betätigungseinrichtung 3 ab, was man sich als entsprechenden Spalt zwischen dem Druckstück 7 und dem zugeordneten Ende der Spindel 14 vorstellen kann. Dieser Spalt tritt an der Stelle S auf und ist in Fig. 1 nicht dargestellt. Da nun alle drehbeweglichen Teile gegen Verdrehen gesichert sind, kann unter anwachsendem hydraulischem Druck, unabhängig von seiner Größe, kein Nachstellvorgang erfolgen, da hierzu ein Verdrehen der Mutter 15 notwendig wäre. Das gilt sowohl bei auftretender Sattelverformung, Belagkompression oder sonstige elastische Verformungen, die nur in einer entsprechenden Vergrößerung des oben genannten Spaltes S resultieren. Dieser Spalt bildet quasi eine Gedächtnisfunktion für den durch den Kolben 9 in Fig. 1 nach links zurückgelegten aber noch nicht nachgestellten Weg.

Beim Druckabbau entspannt sich zum einen der Bremssattel und zum anderen wird der Kolben 9 durch die Zylinderdichtung 10 in seine Ausgangsstellung zurückgezogen. Eine darüber hinausgehende Bewegung des Kolbens nach rechts ist nicht möglich, da die Zylinderdichtung nicht weiter zurückholen kann als der Kolben zuvor aus seiner Ausgangsstellung nach links befördert wurde. Da voraussetzungsgemäß kein Belagverschleiß auftrat, liegt die Spindel anschließend wieder an der mechanischen Betätigungsvorrichtung 3 an, da durch die Rückbewegung des Kolbens der vorher gebildete Spalt vollkommen aufgebraucht wurde. Die Lage der mechanischen Betätigungsvorrichtung gegenüber der Lage der Spindel 14 bildet somit quasi eine Gedächtnisfunktion über den an sich gerade nachzustellenden Weg, wobei eine tatsächliche Nachstellung aber erst dann vorgenommen wird, wenn nach dem Druckabbau das von dem Spalt beschriebene Ergebnisprotokoll zeigt, daß die Rückbewegung des Kolbens 9 doch nicht ganz in dessen Ausgangslage geführt hat, worauf, wie weiter unten noch beschrieben wird, die Nachstellvorrichtung durch die Kraft der Federn nachgestellt wird.

Anschließend wird die Arbeitsweise der erfindungsgemäßen Nachstellung bei auftretendem Belagverschleiß betrachtet, wobei die auftretenden Vorgänge mit der one-shot-Nachstellung vergleichbar sind und zu dieser analog verlaufen.

Beim Druckaufbau spielen sich wieder die gleichen Vorgänge, wie weiter oben schon beschrieben, ab. Wegen des Belagverschleißes bzw. des für den Einbau der Bremse notwendigen Belageinstellmaßes ist der Kolbenweg allerdings größer als der maximale Rückholweg aufgrund der Roll-back-Wirkung der Zylinderdichtung 10.

Beim Druckabbau reicht das Roll-back-Verhalten des Zylinderdichtrings 10 somit nicht aus, um den Kolben 9 in seine vor dem Druckaufbau eingenommene Ausgangsstellung zu bringen, das heißt, es verbleibt ein Restspalt S (z. B. S_{X}) zwischen Spindel 14 und mechanischer Betätigungseinrichtung 3, insbesondere dem Druckstück 7. Im druckfreien Zustand des Bremsdruckraumes 27 ist nunmehr die Rückzugskraft der ersten Feder 22 größer als die entgegengesetzt gerichtete zum Schließen des Konus dienende Konus-Schließkraft der zweiten Feder 36 einschließlich der Manschettenreibkraft FRM und der Reibkraft des Gewindes 29. Infolgedessen drückt die erste Feder 22 die Spindel 14 nach rechts zurück bis der Spalt S zur mechanischen Betätigungsvorrichtung 3 hin geschlossen ist (es gilt S_{X} = 0).

Die sich nach rechts bewegende Spindel 14 zieht über das Gewinde 29 an der Mutter 15, wodurch der Reibkonus 20 entlastet wird und die Mutter auf dem Gewinde 29 drehen kann. Dabei drückt die zweite Feder 36 unter Überwindung der Manschettenreibkraft (einschließlich der Gewindereibkraft) über die Dichtungseinheit 16 gegen den Konusansatz 19 der Mutter 15, wodurch die Mutter dreht. Sie dreht sich dabei soweit, bis die Reibkraft im Reibkonus 20 soweit angestiegen ist, daß eine weitere Drehbewegung verhindert wird. Hierdurch ist die Nachstellung beendet und die Ausgangssituation für den nachfolgenden Bremsvorgang hergestellt.

Im folgenden werden die bei der mechanischen Bremsbetätigung (Feststellbremse) auf- tretenden Vorgänge beschrieben. Durch Drehen der Betätigungs- welle 6 wird das Druckstück 7 auf den Schaft 39 der Spindel 14 gepreßt, wobei die Spindel in Fig. 1 nach links bewegt wird bis das Spiel des Gewindes 29 aufgebraucht ist und die Spindel 14 auf die Mutter 15 drückt. Hierdurch wird der Konusansatz 19 gegen die Reibfläche des Kolbens 9 gepreßt, wobei der, wie weiter oben beschrieben, schon anfänglich geschlossene Reibkonus 20 noch fester geschlossen wird. Eine weitere Bewegung der Spindel 14 nach links drückt auf den Kolben und bewegt den Kolben in der gleichen Richtung gegen Belag und Bremsscheibe. Das Gewindeantriebsmoment, welches versucht, aufgrund der auf die Spindel ausgeübten Kraft, die Mutter zu drehen, wird durch das Reibmoment des Reibkonus 20 aufgefangen, das heißt die Mutter kann sich trotz der Zu- spannkraft der mechanischen Betätigungsvorrichtung 3 nicht drehen. Eine Nachstellung ist somit unmöglich. Während der mechanischen Bremsbetätigung wird die erste Feder 22 durch die Spindelbewegung komprimiert.

Wird die mechanische Betätigung beendet, das heißt, die Feststellbremse gelöst, so geht die Betätigungsvorrichtung 3 zurück. Durch die Roll-back-Wirkung der Zylinderdichtung 10 wird der Kolben zurückgezogen. Die erste Feder 22 zieht die Spindel 14 nach rechts zurück. Der Reibkonus 20 bleibt durch die Reibkraft der Manschettendichtung 31 und der Wirkung der zweiten Feder 36 geschlossen, das heißt die Mutter 15 kann sich nicht drehen. Die erste Feder 22 überwindet das Gewindespiel bis die Spindel wieder in ihre Endlage kommt und die vor der mechanischen Betätigung bestehende Ausgangslage ist wieder hergestellt. Bedingung hierbei ist allerdings, daß das Gewindespiel größer ist als die Summe aus Lüftspiel, Belagkompression und Satteldehnung.

Nachfolgend werden einige vorteilhafte Änderungen hinsichtlich der erfindungsgemäßen Nachstelivorrichtung anhand der Figuren 2 bis 18 beschrieben.

Fig. 2 zeigt eine gegenüber Fig. 1 abgeänderte Dichtungseinheit 16. Zur Kostenreduzierung wurde das Nadellager 32 aus Fig. 1 gegen ein Kugellager 40 in Fig. 2 ausgetauscht, was allerdings nur dann empfehlenswert ist, wenn der vergrößerte, durch die Kugeln ausgeübte punktförmige Druck durch das für die Mutter ausgewählte Material auch verkraftet wird. Zur Erhöhung der Gleitfähigkeit der Dichtungseinheit 16 wurde die Manschettendichtung 31 von einem einteiligen Gleitring 41 umgeben wie in Fig. 2 oben gezeigt. Dieser einteilige Gleitring kann aber auch durch 2 Gleitringe 42, 43 ersetzt sein, wie aus Fig. 2 unten ersichtlich. Durch derartige Ringe läßt sich die Gleitfähigkeit der Dichtungseinheit 16 erheblich erhöhen. Eine verbesserte Dichtung und eine verbesserte Kraftübertragung der zweiten Feder 36 auf das Kugellager 40 läßt sich durch eine zentrierte Hülse 44 erreichen, die die Dichtlippen 35 in geeigneter Weise stützt.

Fig. 3 zeigt eine andere gegenüber der Dichtungseinheit nach Fig. 1 abgeänderter Dichtungseinheit, bei der gegenüber Fig. 2 der einteilige bzw. zweiteilige Gleitring durch jeweils 2 schmale Gleitringe 45 ersetzt wurde. Ansonsten ist die Dichtungseinheit 16 nach Fig. 3 mit der nach Fig. 2 identisch. Weitere Änderungen können sich dadurch ergeben, daß man an der inneren oder äußeren Dichtfläche der Manschette 31 auf den oder die Gleitringe verzichtet. Die Gleitringe 45 können in entsprechende Ausnehmungen der Manschettendichtung 31 eingeknöpft sein.

Fig. 4 zeigt in auseinander-gezogener Darstellung (Explosionsdarstellung) eine Dichtungseinheit 16, die weitgehend der in Fig. 2 gezeigten entspricht. Dabei sind die beiden Gleitringe 42, 43 durch Stege 45 miteinander verbunden. Die anderen in Fig. 4 aufgeführten Teile entsprechen den in Fig. 2 unter der gleichen Nummerierung aufgeführten Teilen.

Die Figuren 5 bis 12 behandeln in geschnittener Seitenansicht und Draufsicht verschiedene Möglichkeiten der drehfesten, axial verschiebbaren Lagerung der Spindel 14. Im Gegensatz zu der Spindel 14 nach Fig. 1 besitzt die Spindel 14 nach Fig. 5 zwei einander gegenüberliegende, im wesentlichen halbkreisförmige, sich radial erstreckende Ansätze 17, die in entsprechende Arretierungsnuten 18 (in Fig. 1) ragen und für eine Drehsicherung und axiale Verschiebbarkeit sorgen. Fig. 7 und 8 zeigen die Verwendung eines Montagetopfes 46 zur Lagerung der Spindel 14, wobei der Montagetopf 46 im Gehäuse und die Spindel 14 durch vier paarweise einander gegenüberliegende Ansätze gegenüber dem Montagetopf 46 drehgesichert sind. Eine Rastnut 46 sorgt für die Aufnahme des einzurastenden Federtopfes 21 gemäß Fig. 1 in den Montagetopf 46. Die erste Feder 22 stützt sich an einem Stützblech 48 ab. Die Einheit aus Federtopf 21, erster Feder 22, Montagetopf 46, Spindel 17 und Stützblech 48 kann vormontiert werden und als Einheit in den Zylinder 8 gemäß Fig. 1 eingesetzt werden.

Fig. 9 und 10 zeigt die Drehsicherung und axiale Verschiebbarkeit der Spindel 14 mittels eines Halteblechs 49, wobei die Spindel 14 derart mit Kanten durch eine Öffnung in dem Halteblech 49 ragt, daß sie sich gegenüber diesem nicht verdrehen kann. Die Drehsicherung des Halteblechs 49 gegenüber den Bremsengehäuse 5 (Fig. 1) kann beispielsweise mit Hilfe einer Nase 50 (entsprechend den Ansätzen 17 in Fig. 5 bis 8) oder mit Hilfe eines Haltestiftes 51 geschehen, welcher eine entsprechende Bohrung in dem Halteblech 49 durchdringt und in eine zur Zylinderlängsachse parallele entsprechende Bohrung in einem Absatz des Zylinders 8 ragt.

Fig. 13 zeigt eine gegenüber Fig. 1 modifizierte Ausführung der erfindungsgemäßen Nachstellvorrichtung, wobei von den weiter oben beschriebenen Modifikationen zum Teil Gebrauch gemacht wurde. Eine zusätzliche Änderung ergibt sich noch durch den Austausch der Haltenut 37 nach Fig. 1 durch eine Kolbenhülse 52, die als Sicherung für den Fall dient, daß die Bremsbewegung des Kolbens 9 durch die Feder 36 behindert wird, da dann bei einer vorgegebenen Kraft die Hülse 52 aus dem Kolben gedrückt wird. Die Figuration der Gleitringe entspricht im wesentlichen der nach Fig. 2 (unten), wobei der Boden der Manschettendichtung 31 allerdings nicht fest auf der Stützscheibe 33 aufliegt, sondern auf nicht dargestellten Stegen 45 gemäß Fig. 4.

Aus Fig. 14 ist eine Modifikation zu ersehen, die den im Zusammenhang mit Fig. 7 und 8 beschriebenen Merkmalen entspricht. Der Montagetopf 46 hat dabei eine etwas massivere Ausführung erhalten. Fig. 14 zeigt weiterhin einen Druckpilz 53. Wird dieser Druckpilz in Fig. 14 nach rechts eingedrückt, so läßt sich der Reibkonus 20 lösen, wodurch sich der Kolben 8 für den Fall notwendiger Reparaturen (zum Beispiel Auswechseln der Beläge) nach rechts in den Zylinder einschieben läßt. Der Druckpilz 53 ist dabei mit Spiel in einer entsprechenden Öffnung am Boden des Kolbens 9 gelagert, so daß auf ein Durchgangsloch 26 entsprechend Fig. 1 verzichtet werden kann.

Fig. 15 zeigt in Abweichung zur Fig. 13 eine abgeänderte Ausgestaltung der Dichtungseinheit 16. Die gegenüber Fig. 13 unveränderten Teile der Betätigungseinrichtung wurden daher in Fig. 15 weggelassen (rechte Seite von Fig. 13). Das Wälzlager 14 liegt dabei zwischen einer Laufscheibe 54 und einem Stützring 55, so daß die Wälzkörper des Wälzlagers 40 auf Material geeigneter Härte laufen können. Der Stützring hat die Aufgabe die Lauffläche für das Wälzlager 40 in hinreichendem Abstand zu dem Boden der Manschettendichtung 31 zu halten.

Fig. 16 zeigt eine Ausführung der erfindungsgemäßen Nachstellvorrichtung ohne eine zweite Feder 36, wobei das Stützglied 56 die Aufgabe der Feder als Widerlager mit übernimmt, gemäß Fig. 1. Die Arbeitsweise der Nachstellvorrichtung wurde weiter oben schon hinreichend beschrieben. Selbstverständlich sind im Rahmen der Erfindung auch andere von Fig. 16 abweichende Ausführungen der Dichtungseinheit 16 möglich ohne den Rahmen der Erfindung zu verlassen. Ein Wälzlager 40 läuft in Fig. 16 auf einem Stützglied 56. Die Dichtungseinheit 16 kann aber auch entsprechend Fig. 1 aufgebaut sein.

Die in Fig. 17 gezeigten Abweichungen zu Fig. 1 bestehen im wesentlichen in dem Austausch der Dichtkugel 30 durch ein im wesentlichen zylindrisches Verschlußstück 57, in das eine Ausnehmung 58 eingearbeitet wurde, die zur Aufnahme eines Werkzeugs dienen kann. Hierdurch läßt sich beispielsweise durch einen Sechskantschlüssel die Mutter sowohl von dem Reibkonus wegdrücken als auch durch Drehbewegung auf der Spindel in Fig. 17 nach rechts schrauben wodurch die Nachstellung gelöst und der Kolben sich leicht eindrücken läßt. Die Ausnehmung 52 besitzt einen Stopfen 53 der die Ausnehmung 58 verschließt und von Schmutz freihält. In Fig. 17 ist noch der von dem Kolben betätigte Bremsklotz 59 sowie ein Abschnitt der Bremsscheibe 60 gezeigt auf die der Bremsklotz 59 einwirkt. Soweit in Fig. 17 der aus Fig. 1 ersichtliche Raum 25 Umgebungsdruck aufweisen soll, muß das Verschlußstück 57 mit einem ent- sprechenden Spiel durch die durchgehende Stirnöffnung 61 im Kolben ragen.

In Fig. 18 ist das Verschlußstück 57 in modifizierter Form dargestellt, weist aber ebenfalls eine Ausnehmung 58 zur Aufnahme eines Werkzeugs auf. Ein Deckel 62 sichert den Kolbeninnenraum vor dem Eindringen von Schmutz. Dieser Deckel ist lösbar, damit die Mutter über die Ausnehmung 58 nach rechts hineingeschraubt werden kann. Selbstverständlich ist es möglich, das Verschlußstück 57 einstückig mit der Mutter 15 auszubilden.

Zur Verbesserung der Gleitfähigkeit kann die Dichtungseinheit Gleitringe aus Teflon besitzen, welches gut gleitet und elastisch ist. Der im Zusammenhang mit Fig. 13 beschriebene Austausch der mutterseitigen Gleitringe durch eine Ausnehmung läßt eine Dichtwirkung in 2 Druckstufen zu. Dabei dichten zunächst nur die Dichtlippen bei geringerem Reibungswiderstand während bei höherem Druck die Ausnehmung 34 durch das Material der Manschettendichtung ausgefüllt und hierdurch die Dichtwirkung erhöht wird. Die Zentrierhülse 44 ist so gestaltet, daß sie bei guter Entlüftbarkeit die Federkraft durch die Gummimembran auf den Stützring und damit auf das Axiallager und den Reibkonus überträgt. Bei höheren hydraulischen Drücken presst die sich aufweitende Manschette die Teflonringe gegen die Dichtflächen und unterstützt somit die Dichtwirkung der elastischen Lippen (2-Stufen-Dichtung). Als Nebeneffekt erhöhen sich hierdurch die Reibkräfte und die Mutter wird verstärkt am Drehen gehindert. Zudem ist die Lage der Dichtungseinheit 16 axial so weit von der heißen Bremsscheibe entfernt, daß keine Temperaturproblem zu erwarten sind, die bei den bekannten Nachstellvorrichtungen vorkommen können. Durch den Druckpilz 53 ist es möglich, den Kolben ohne Kolbendrehen zum Belagwechsel zurückzusetzen, insbesondere wenn das Gewinde 29 ein Trapezgewinde ist. Die zweite Feder 22 bildet für die Bewegung des Kolbens 9 gleichzeitig einen Anschlag. Hierdurch wird die mögliche Bewegung des Kolbens begrenzt, was beispielsweise bei einer Belagfehlmontage (Bremsbelag wurde vergessen) oder bei der ersten hydraulischen Betätigung vorteilhaft ist, da hier der Kolben einen Weg zurücklegen will, der der Summe des normalen Betätigungsweges einschließlich des normalen Bremsbelagverschleißes überschreiten kann. Durch diesen internen Anschlag ist sichergestellt, daß die Spindel nicht weiter herausfahren kann, als für die Spindeldichtung (O-Ring 38) zulässig ist. Die Bremse bleibt somit auch bei Fehlbedienungen bzw. Fehlmontage druckdicht. Da die Spindel durch diesen Anschlag im axialen Weg begrenzt ist, entsteht durch den hydraulischen Druck eine hohe Kolbenkraft. Als weiteres Sicherungselement ist neben der Haltenut 37, wie weiter oben beschrieben, die Kolbenhülse 52 vorgesehen. Die Länge dieser Hülse ist so dimensioniert, daß, bedingt durch die Kolbenkraft, die Federhülse im Kolben einen Weg gleiten kann, der etwa der Dicke des Bremsbelages entspricht. Die Kolbenhülse verliert dabei nicht ihre Führung und durch Einschieben des Kolbens in das Gehäuse kann die Kolbenhülse wieder bündig zum Kolben gebracht werden und die Bremse behält somit ihre volle Funktionsfähigkeit.

Das Stützglied 56 gemäß Fig. 16 kann nicht nur eine nach innen gerichtete federnde Wirkung haben, sondern auch mit Spiel gegenüber dem Kugellager 40 versehen sein. Dieser minimale Spalt ermöglicht ein leichtgängiges Öffnen des Reibkonuses und ermöglicht den Nachstellfall entsprechend den oben genannten Beschreibungen.

Der Deckel 62 ist zwar mit Abstand zum Kolben 9 auf die Mutter 15 aufgepreßt und läßt somit eine hinreichende axiale Bewegung der Mutter 15 zu. Eine Verbesserung und damit eine größere Bewegungsfreiheit für die Mutter 15 läßt sich aber dadurch erreichen, daß die äußere ringförmige Mantelfläche des Deckels 62 an der ringförmigen Innenwand der den Deckel 62 aufnehmenden Ausnehmung des Kolbens 9 eingepreßt ist.

## Patentansprüche

1. Bremsbetätigungseinrichtung für Fahrzeuge, mit einer hydraulischen Betätigungseinrichtung (2), die einen in einem Zylinder (8) verschiebbar angeordneten Kolben (9) aufweist; mit einer mechanischen Betätigungseinrichtung (3); und mit einer automatischen Nachstellvorrichtung (13), die zwischen der mechanischen Betätigungseinrichtung (3) und dem Kolben (9) als verlängerbares Nachstellglied angeordnet ist und zwei über ein selbsthemmungsfreies Gewinde (29) miteinander verbundene Nachstellelemente (14,15) aufweist, die gegenüber Zylinder und Kolben als drehbare Nachstellmutter (15), in die das selbsthemmungsfreie Gewinde (29) innerhalb einer Durchgangsöffnung (28) eingearbeitet ist, und als undrehbare Nachstellspindel (14) ausgeführt sind, wobei die mechanische Betätigungseinrichtung (3) auf die Nachstellspindel (14) wirkt und mit einer Feder (22) gegenüber dem drehbaren Nachstellelement vorgespannt ist; mit einer zwischen der Nachstellmutter (15) und dem Kolben (9) wirkenden Reibungskupplung (20) zum Festhalten der Nachstellmutter (15) bei mechanischer Betätigung; und mit einer undrehbar angeordneten Dichtung (31), durch die die Nachstellmutter (15) relativ zum Kolben verschiebbar ist, wobei die Nachstellmutter (15) mittels einer Feder (22) vorgespannt ist, die von dem bei hydraulischer Bremsbetätigung aufgebrachten Druck überwunden wird, um eine Nachstellung durch Verschrauben zu verhindern wenn der Druck einen vorbestimmten, verhältnismäßig niedrigen Wert übersteigt, **dadurch gekennzeichnet,** daß die Durchgangsöffnung (28) der Nachstellmutter (15) an dem dem Kolbenboden zugewandten Ende mit einer eingepreßten Kugel (30) oder einem zylindrischen Verschlußstück (57) druckdicht verschlossen ist.

2. Bremsbetätigungseinrichtung nach Anspruch 1, **dadurch gekennzeichnet,** daß die Nachstellmutter (15) in das Innere des Kolbens (9) ragt, wobei der zwischen dem geschlossenen Kolbenboden und der Dichtung (31) gebildete Raum (25) durch ein Durchgangsloch (67) im Kolben (9) mit dem Luftdruck verbunden ist.

3. Bremsbetätigungseinrichtung nach Anspruch 2, **dadurch gekennzeichnet,** daß das Durchgangsloch (67) eine von einer zur Befestigung einer Schutzmanschette (11) dienenden Ringnut (12) in der äußeren Mantelfläche des Kolbens (9) ausgehende, schräg zur Kolbenlängsachse verlaufende Bohrung ist.

4. Bremsbetätigungseinrichtung nach einem der Ansprüche 2 oder 3, **dadurch gekennzeichnet,** daß die Nachstellmutter (15) an ihrem dem Kolbenboden zugewandten Ende einen Konusansatz (19) besitzt, dem ein in den Kolbenboden eingearbeiteter entsprechender Reibkonus (20) zugeordnet ist.

5. Bremsbetätigungseinrichtung nach einem der vorangegangenen Ansprüche, **dadurch gekennzeichnet,** daß die Nachstellmutter (15) über die an dem Kolben (9) abgestützte Dichtung (31) und ein zwischen der Dichtung (31) und der Nachstellmutter (15) befindliches, in axialer Richtung wirkendes Rollenlager (32) gegenüber dem Kolben (9) drehbar gelagert ist.

6. Bremsbetätigungseinrichtung nach Anspruch 5, **dadurch gekennzeichnet,** daß zwischen dem Rollenlager (32) und der Dichtung (31) eine Stützscheibe (33) eingefügt ist.

7. Bremsbetätigungseinrichtung nach Anspruch 1, **dadurch gekennzeichnet,** daß der Kolben (9) eine mit der Kolbenlängsachse fluchtende, durchgehende Stirnöffnung (61) besitzt und daß das zylindrische Verschlußstück (57) der Nachstellmutter (15) mit einer zur Aufnahme eines Schraubwerkzeuges geeigneten Ausnehmung (58) versehen ist, wobei die Ausnehmung (58) mit der Stirnöffnung (61) fluchtet.

8. Bremsbetätigungseinrichtung nach Anspruch 7, **dadurch gekennzeichnet,** daß die Stirnöffnung (61) durch einen lösbaren Deckel (62) oder einen in die Ausnehmung (58) ragenden lösbaren Zapfen (53) verschlossen ist, wobei der Verschluß den Zutritt atmosphärischen Drucks in den Innenraum (25) des Kolbens (9) zuläßt.

## Claims

1. A brake actuating apparatus for vehicles, including a hydraulic actuator (2) having a piston (9) slidable in a cylinder (8); a mechanical actuator (3); and an automatic readjusting device (13) which is arranged as an extendible readjusting means between the mechanic actuator (3) and the piston (9) and has two readjusting members (14,15) interconnected by a thread (29) without self-locking engagement, with the readjusting members being configured as a rotatable readjusting nut (15), into an orifice (28) of which the thread (29) without self-locking engagement is formed, and as an unrotatable readjusting spindle (14), wherein the mechanical actuator (3) acts upon the readjusting spindle (14) and is biassed relative to the rotatable readjusting member by a spring (22); a friction coupling (20) acting between the readjusting nut (15) and the piston (9) for retaining the readjusting nut (15) upon mechanical actuation; and an unrotatably arranged sealant (31) by which the readjusting nut (15) is displaceable in relation to the piston, wherein the readjusting nut (15) is biassed by a spring (22) which is overcome by the pressure applied by actuating the brake to prevent readjustment by screwing once the pressure exceeds a predetermined, relatively low value, **characterized** in that the orifice (28) of the readjusting nut (15) is pressure-tightly closed by a ball (30), or by a cylindrical closure member (57), pressed into the end close to the piston bottom.

2. A brake actuating apparatus as claimed in claim 1,
**characterized** in that the readjusting nut (15) protrudes into the interior of the piston (9), with the chamber (25) formed between the closed piston bottom and the sealant (31) being in communication with the air pressure by way of a passage hole (67) within the piston (9).

3. A brake actuating apparatus as claimed in claim 2,
**characterized** in that the passage hole (67) is a bore which originates from an annular groove (12) and extends in a direction oblique to the longitudinal axis of the piston, the annular groove (12) being provided within the outer cylindrical surface of the piston (9) to mount a protective sleeve (11).

4. A brake actuating apparatus as claimed in any one of claims 2 or 3,
**characterized** in that the readjusting nut (15) has a conical shoulder (19) at its end close to the piston bottom, associated with which shoulder (19) is a corresponding friction cone (20) incorporated into the piston bottom.

5. A brake actuating apparatus as claimed in any one of the preceding claims,
**characterized** in that the readjusting nut (15) is rotatably mounted with respect to the piston (9) by way of the sealant (31), supported on the piston (9), and a roller bearing (32) which is located between the sealant (31) and the readjusting nut (15) and acts in an axial direction.

6. A brake actuating apparatus as claimed in claim 5,
**characterized** in that a support disc (33) is provided between the roller bearing (32) and the sealant (31).

7. A brake actuating apparatus as claimed in claim 1,
**characterized** in that the piston (9) has a continuous front orifice (61) in alignment with the longitudinal axis of the piston, and in that the cylindrical closure member (57) of the readjusting nut (15) is provided with a recess (58) suitable for accommodating a threaded tool, with the recess (58) being in alignment with the front orifice (61).

8. A brake actuating apparatus as claimed in claim 7,
**characterized** in that the front orifice (61) is closed by a detachable lid (62), or by a detachable pin (53) protruding into the recess (58), with the closure means permitting access of atmospheric pressure to the interior (25) of the piston (9).

## Revendications

1. Dispositif d'actionnement de frein, pour véhicule automobile, comprenant un dispositif d'actionnement hydraulique (2), qui comporte un piston (9) disposé d'une manière coulissante dans un cylindre (8) ; un dispositif d'actionnement mécanique (3) ; et un dispositif de rattrapage de jeu automatique (13), qui est disposé entre le dispositif d'actionnement mécanique (3) et le piston (9) sous forme d'un organe de rattrapage de jeu pouvant être rendu plus long et comporte deux éléments de rattrapage de jeu (14, 15) qui sont rendus solidaires l'un de l'autre par l'intermédiaire d'un filetage (29) sans autoblocage et qui sont réalisés, vis-à-vis du cylindre et du piston, sous forme d'un écrou de rattrapage de jeu (15) rotatif, dans lequel le filetage (29) sans autoblocage est ménagé à l'intérieur d'une ouverture traversante (28), et sous forme d'une vis sans fin de rattrapage de jeu (14) non rotative, tandis que le dispositif d'actionnement mécanique (3) exerce son action sur la vis sans fin de rattrapage de jeu (14) et est soumis par un ressort (22) à une précontrainte vis-à-vis de l'élément de rattrapage de jeu rotatif ; un accouplement à friction (20) qui exerce son action entre l'écrou de rattrapage de jeu (15) et le piston (9) et sert à immobiliser l'écrou de rattrapage de jeu (15) lors d'un actionnement mécanique ; et une garniture d'étanchéité (31) qui est disposée d'une manière non rotative et à travers laquelle l'écrou de rattrapage de jeu (15) peut être déplacé d'une manière coulissante vis-à-vis du piston, tandis que l'écrou de rattrapage de jeu (15) est soumis à une précontrainte au moyen d'un ressort (36) dont la force est vaincue par la pression appliquée lors d'un actionnement de frein hydraulique, afin d'empêcher un rattrapage de jeu par vissage lorsque la pression dépasse une valeur préfixée relativement faible, caractérisé en ce que l'ouverture traversante (28) de l'écrou de rattrapage de jeu (15) est obturée d'une manière étanche à la pression, à l'extrémité tournée vers le fond du piston, par une bille (30) emboîtée à force ou par une pièce d'obturation (57) cylindrique.

2. Dispositif d'actionnement de frein selon la revendication 1, caractérisé en ce que l'écrou de rattrapage de jeu (15) fait saillie à l'intérieur du piston (9), tandis que la chambre (25) formée entre le fond de piston fermé et la garniture d'étanchéité (31) communique avec la pression atmosphérique par l'intermédiaire d'un trou de passage (67) ménagé dans le piston (9).

3. Dispositif d'actionnement de frein selon la revendication 2, caractérisé en ce que le trou de passage (67) est un perçage qui s'étend d'une manière inclinée vis-à-vis de l'axe longitudinal du piston et qui part d'une gorge annulaire (12) ménagée dans la surface périphérique extérieure du piston (9) et sert à la fixation d'une manchette de protection (11).

4. Dispositif d'actionnement de frein selon l'une des revendications 2 ou 3, caractérisé en ce que l'écrou de rattrapage de jeu (15) comporte, à son extrémité tournée vers le fond de piston, une partie en saillie de cône (19) à laquelle est associé un cône de frottement (20) correspondant ménagé dans le fond de piston.

5. Dispositif d'actionnement de frein selon l'une des revendications précédentes, caractérisé en ce que l'écrou de rattrapage de jeu (15) est monté rotatif vis-à-vis du piston (9) par l'intermédiaire de la garniture d'étanchéité (31), qui prend appui sur le piston (9), et d'un palier de roulement (32) qui est situé entre la garniture d'étanchéité (31) et l'écrou de rattrapage de jeu (15) et exerce son action suivant la direction axiale.

6. Dispositif d'actionnement de frein selon la revendication 5, caractérisé en ce qu'un disque d'appui (33) est inséré entre le palier de roulement (32) et la garniture d'étanchéité (31).

7. Dispositif d'actionnement de frein selon la revendication 1, caractérisé en ce que le piston (9) comporte une ouverture frontale traversante (61) disposée suivant le même alignement que l'axe longitudinal de piston et en ce que la pièce d'obturation (57) cylindrique de l'écrou de rattrapage de jeu (15) est pourvue d'un évidement (58) apte à recevoir un outil de vissage, l'évidement (58) étant disposé suivant le même alignement que l'ouverture frontale (61).

8. Dispositif d'actionnement de frein selon la revendication 7, caractérisé en ce que l'ouverture frontale (61) est obturée au moyen d'un capuchon (62) amovible ou d'un bouchon (53) amovible pénétrant dans l'évidement (58), l'obturation autorisant l'entrée de la pression atmosphérique dans la cavité (25) du piston (9).
